# EUROPEAN PATENT SPECIFICATION

(11) **EP 2 022 974 B1**
(45) Date of publication and mention of the grant of the patent: **02.04.2014**
(21) Application number: 08252495.0
(22) Date of filing: 23.07.2008
(51) Int. Cl.: F02M 35/16

(54) **Vehicle**
Fahrzeug
Véhicule

(30) Priority: 24.07.2007 JP 2007192575
(43) Date of publication of application: 11.02.2009
(73) Proprietor: Yamaha Hatsudoki Kabushiki Kaisha, Shizuoka-ken Shizuoka 438-8501 (JP)
(72) Inventor: Sudoh, Takehiko, Iwata-shi, Shizuoka-ken 438-8501 (JP)
(74) Representative: Moreland, David

(56) References cited:
- EP-A1- 1 464 824
- EP-A2- 1 387 081
- EP-A2- 1 655 464
- EP-A2- 1 845 241
- EP-A2- 2 103 800

## Description

### FIELD OF THE INVENTION

This invention relates to a vehicle, and more particularly to a vehicle provided with a frame extending to a rear side from a head pipe.

### BACKGROUND TO THE INVENTION

JP-A-2006-213250 discloses a motorcycle provided with a frame extending to a rear side from a head pipe. More specifically, JP-A-2006-213250 discloses a motorcycle which is provided with right and left main frames extending to a rear side from a head pipe, a lower case portion of an air cleaner arranged between the right and left main frames, and an upper case portion attached to an upper side of the lower case portion. A mating face between the upper case portion and the lower case portion in the air cleaner of the motorcycle is formed in such a manner as to protrude to a portion near upper ends of the right and left main frames.

However, in the structure disclosed in JP-A-2006-213250 mentioned above, for example, in the case that a predetermined part such as a motor or the like is attached to a side portion of the lower case portion of the air cleaner, it is necessary to make a height of the lower case portion in conformity to a magnitude of the predetermined part. In this case, it is considered that the mating face of the lower case portion of the air cleaner is arranged in an upper side than the portion near the upper ends of the right and left main frames. As a result, since a large space is generated between the upper end of the main frame and the mating surface of the lower case portion, there is a problem that it is hard to effectively utilize the space in the upper portion of the air cleaner at the space generated between the upper end of the main frame and the mating face of the lower case portion.

This invention is made for the purpose of solving or at least mitigating the problem as mentioned above, and an object of this invention is to provide a vehicle which can effectively utilize a space in an upper portion of an air chamber while inhibiting a relative position of a mating face between an upper case portion and a lower case portion of an air chamber with respect to a frame portion from becoming higher.

EP1655464 describes a motorcycle comprising an air cleaner connected to an air intake port through an intake duct. The air cleaner comprises a lower bowl shaped casing that opens upwardly and an upper bowl shaped casing that opens downwardly. The upper and lower casings are joined together in a state wherein their mutual peripheral edges are butted against each other such that an air intake chamber is formed inside the upper and lower casings. Intake passages of the engine are provided with a first funnel fitted into through-holes in a bottom surface of the lower casing of the air cleaner. Cylinders that are movable between positions in which the lower ends thereof are fitted into the first funnels and positions wherein the lower ends of the cylinders are away from the first funnels. A motor for actuating the cylinders is provided outwith the air cleaner.

EP1387081 describes a motorcycle in which an engine is mounted on a body frame. The body frame comprises a pair of left and right tank rails, which extend rearwardly and downwardly from a head pipe and a fuel tank. A recessed portion that opens downwardly is formed at a lower portion of the fuel tank to house an air cleaner box therein. The air cleaner box is formed from a box body and a lid body that closes an opening of an upper end portion of the box body. The lid body opens downwardly and is releasably mounted on the box body by means of an engaging member such as a rubber band such that the lid body covers an opening portion formed on an upper end of the box body.

EP1464824 describes a fuel injection system for a motorcycle, wherein the motorcycle comprises a head pipe and a left-right pair of main frames that extend rearwardly and downwardly from the head pipe. An air cleaner for cleaning air supplied to the engine is disposed on the upper side of a cylinder head of the engine so as to be located on a rear side of the head pipe. A fuel tank covering an upper portion and a rear portion of the air cleaner is mounted on both the main frames of the vehicle. A fuel injector for injecting fuel at a time of high speed rotation of the engine is attached to the cleaner case.

### SUMMARY OF THE INVENTION

Various aspects of the present invention are defined in the independent claims. Some preferred features are defined in the dependent claims.

Described herein is a vehicle which is provided with a head pipe, a frame portion extending to a rear side from the head pipe, an engine having an air intake port, an air chamber including a lower side case portion communicating with the air intake port, and an upper case portion arranged in an upper side of the lower case portion, and a predetermined part attached to a side surface of the air chamber, wherein a mating face between the upper case portion and the lower case portion is arranged near an upper end of the frame portion, and an upper end portion of the predetermined part is structured such as to be positioned in an upper side than an upper end portion of a part of the frame portion as seen from a side direction of the vehicle.

Since the mating face between the upper case portion and the lower case portion is arranged near the upper end of the frame portion as mentioned above, it is possible to inhibit the large space from being generated between the upper end of the frame portion, and the mating face between the upper case portion and the lower case portion. Accordingly, it is possible to inhibit the relative position of the mating face between the upper case portion and the lower case portion of the air chamber with respect to the frame portion from becoming higher. As a result, it is possible to effectively utilize the space in the upper portion of the air chamber, in comparison with the case that the space is generated between the upper end of the frame portion, and the mating face between the upper case portion and the lower case portion. Further, since the upper end portion of the predetermined part is structured such as to be positioned in the upper side than the upper end portion of a part of the frame portion as seen from a side direction of the vehicle, it is possible to inhibit the predetermined part from interfering with the fuel piping or the like of the engine unlike with the predetermined part being arranged in the lower side.

Also described herein is a vehicle comprising:
a frame portion;
an engine having an air intake port;
an air chamber in communication with the intake port and including upper and lower side case portions, wherein a mating face between said upper and lower case portions is arranged near an upper end of said frame portion; and
a predetermined part attached to a side surface of said air chamber, wherein an upper end portion of said predetermined part is structured such as to be positioned above an upper end portion of a part of said frame portion as seen from a side direction of the vehicle.

The vehicle may further comprise a head pipe, and the frame portion may extend rearward form the head pipe.

Said lower case portion may include a first engagement portion which is at least partly arranged near an upper end of said frame portion. Said upper case portion may include a second engagement portion. The first and second engagement portions may be provided in such a manner as to correspond and engage each other.

The predetermined part may comprise an actuator. However, the predetermined part may alternatively, or additionally, comprise a further vehicle component.

The engine may be provided in a lower side of said lower case portion.

The vehicle may further comprise a fixed funnel provided in an inner portion of said lower case portion and adapted to introduce air to said air intake port of said engine. The vehicle may further comprise a movable funnel arranged movably in an air intake port side of said fixed funnel and adapted to conduct air to the air intake port of said engine together with said fixed funnel. In this arrangement the predetermined part, which may be an actuator, may be provided for moving said movable funnel.

A portion of the first engagement portion of said lower case portion corresponding to a portion to which said predetermined part is attached may be formed in such a manner as to protrude to an upper side than the other portions of said first engagement portion to which said predetermined part is not attached.

The mating face between said lower case portion and said upper case portion may be structured on the basis of an engagement between the first engagement portion of said lower case portion and the second engagement portion of said upper case portion. A portion of said mating face corresponding to the portion to which said predetermined part is attached may be formed in such a manner as to protrude to an upper side than the other portions of said mating face to which said predetermined part is not attached.

An outer peripheral edge near an upper end of said lower case portion may be formed in such a manner as to protrude to an outer side. A first engagement portion of said lower case portion may be provided along an outer peripheral edge near an upper end portion protruded to the outer side of said lower case portion. At least a part of the first engagement portion of said lower case portion may be arranged just above said frame portion.

The frame portion , ay include a first frame portion and a second frame portion which are formed in such a manner as to be branched in a vehicle width direction.

The lower case portion may be arranged between said first and second frame portions.

The first engagement portion of said lower case portion may be arranged near upper ends of said first and second frame portions.

The predetermined part may be arranged in a side portion of said lower case portion positioned between said first frame portion and said second frame portion.

The first engagement portion of said lower case portion may include a convex portion provided in such a manner as to protrude to an upper side. The second engagement portion of said upper case portion may include a concave portion provided in such a manner as to protrude to a lower side and engage with the convex portion of said lower case portion.

The vehicle may further comprise a seal member for sealing between the concave portion of said upper case portion and the convex portion of said lower case portion.

The vehicle may further comprise a fuel tank arranged in such a manner as to cover an upper side of said upper case portion.

The fuel tank may be structured such as to cover at least a part of the upper side of said frame portion. The fuel tank may be structured to cover at least a part of the upper side of said upper case portion in a vehicle width direction.

The fuel tank may be structured such as to cover at least a part of a side portion of said upper case portion. The fuel tank may be structured to cover at least part of the upper side of said upper case portion.

The vehicle may further comprise an air filter arranged in an inner portion of said air chamber and purifying the air fed to the air intake port of said engine.

Further aspects of the present invention may relate to a vehicle frame, an air chamber, an engine or the like, as defined above.

### BRIEF DESCRIPTION OF THE DRAWINGS

These and other aspects of the present invention will now be described, by way of example only, with reference to the accompanying drawings, in which:
Fig. 1 is a side elevational view showing a whole structure of a motorcycle in accordance with an embodiment of the present invention;
Fig. 2 is a side elevational view around a cleaner box of the motorcycle in accordance with the embodiment shown in Fig. 1;
Fig. 3 is a plan view around a lower box portion of the motorcycle in accordance with the embodiment shown in Fig. 1;
Fig. 4 is a cross sectional view around the cleaner box of the motorcycle in accordance with the embodiment shown in Fig. 1;
Fig. 5 is a diagram for explaining a shape of an engagement surface portion of the lower box portion of the motorcycle in accordance with the embodiment shown in Fig. 1;
Fig. 6 is a back view showing an upper box portion of the motorcycle in accordance with the embodiment shown in Fig. 1;
Fig. 7 is a perspective view of a state in which a movable funnel of the motorcycle in accordance with the embodiment shown in Fig. 1 is moved to an away position;
Fig. 8 is a side elevational view around an intermediate link lever of the state in which the movable funnel of the motorcycle in accordance with the embodiment shown in Fig. 1 is moved to the away position;
Fig. 9 is a side elevational view around an upper link lever and a lower link lever of the state in which the movable funnel of the motorcycle in accordance with the embodiment shown in Fig. 1 is moved to the away position;
Fig. 10 is a perspective view of a state in which the movable funnel of the motorcycle in accordance with the embodiment shown in Fig. 1 is moved to a contact position;
Fig. 11 is a side elevational view around the intermediate link lever of the state in which the movable funnel of the motorcycle in accordance with the embodiment shown in Fig. 1 is moved to the contact position;
Fig. 12 is a side elevational view around the upper link lever and the lower link lever of the state in which the movable funnel of the motorcycle in accordance with the embodiment shown in Fig. 1 is moved to the contact position;
Fig. 13 is a plan view for explaining a detailed structure around a funnel of the motorcycle in accordance with the embodiment shown in Fig. 1;
Fig. 14 is a cross sectional view for explaining an attaching structure of a fixed funnel to a throttle body in the motorcycle in accordance with the embodiment shown in Fig. 1;
Fig. 15 is a side elevational view for explaining a structure of the movable funnel of the motorcycle in accordance with the embodiment shown in Fig. 1; and
Fig. 16 is a cross sectional view for explaining a structure of a cleaner box, a main frame and a fuel tank of the motorcycle in accordance with the embodiment shown in Fig. 1.

### DETAILED DESCRIPTION OF THE DRAWINGS

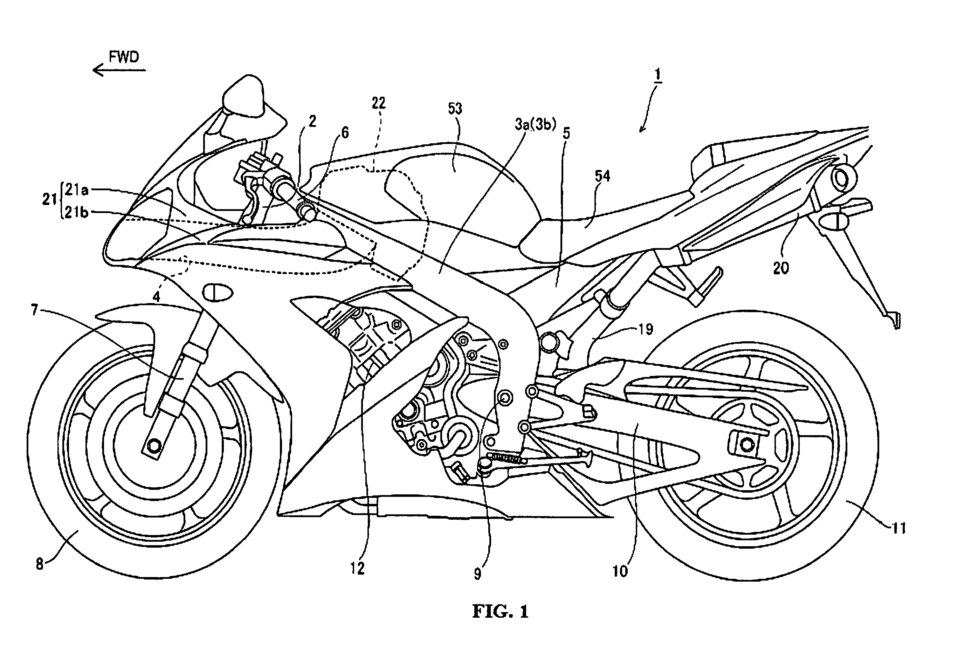

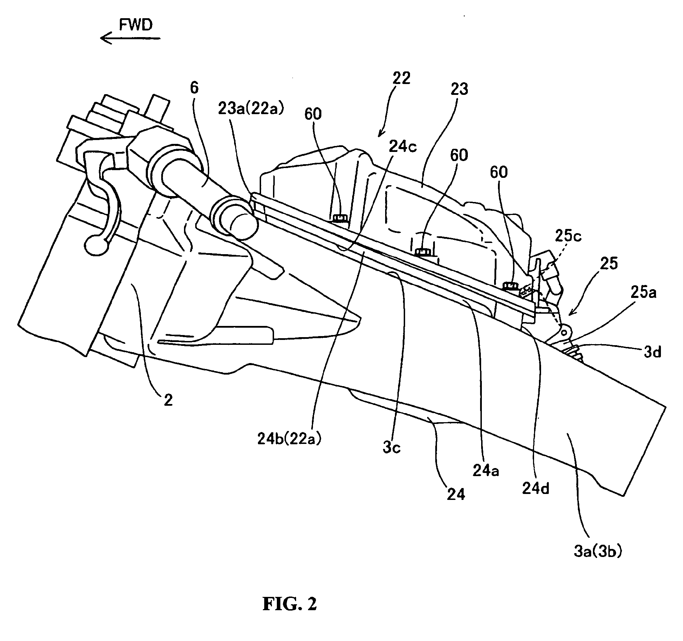

Fig. 1 is a side elevational view showing a whole structure of a motorcycle in accordance with one embodiment of the present invention. Figs. 2 to 16 are diagrams for explaining in detail a structure of a main frame and a cleaner box of the motorcycle in accordance with the embodiment shown in Fig. 1. In this case, in the present embodiment, the motorcycle is described as one example of a vehicle in accordance with the present invention. In the drawings, reference symbol FWD denotes a forward side in a traveling direction of the motorcycle. A description will be first given of a structure of a motorcycle 1 in accordance with the present embodiment with reference to Figs. 1 to 16.

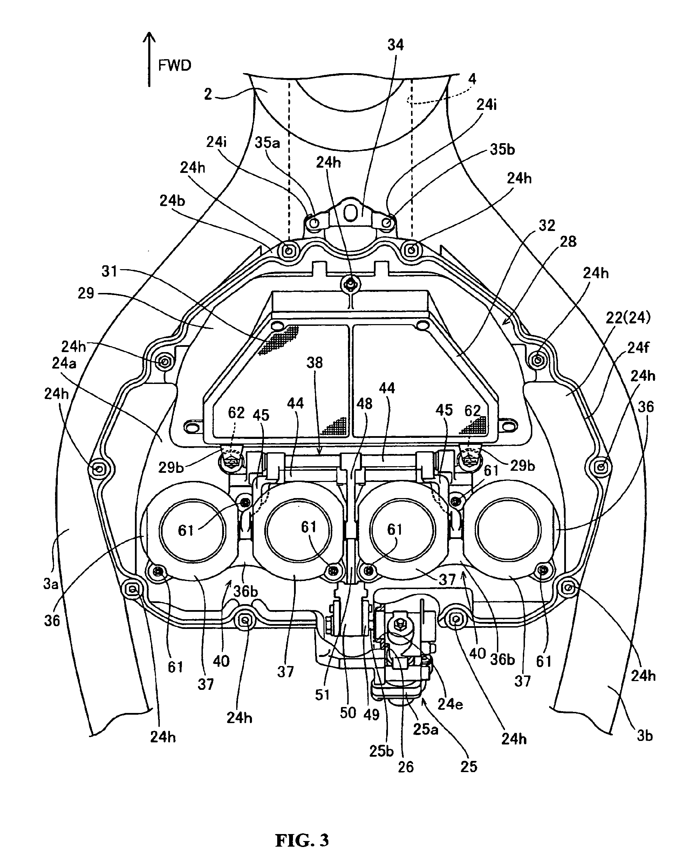

As the structure of the motorcycle 1 in accordance with the present embodiment, as shown in Figs. 1 and 2, front end portions of main frames 3a and 3b are connected to a head pipe 2. In this case, the main frames 3a and 3b correspond to one example of a "frame portion" of the present invention. Further, the main frame 3a is one example of a "frame portion" and a "first frame portion" of the present invention, and the main frame 3b is one example of a "frame portion" and a "second frame portion" of the present invention. Each of these main frames 3a and 3b extends to a rear side from the head pipe 2 as shown in Fig. 3, and is formed in such a manner as to be branched in a vehicle width direction. Further, the main frames 3a and 3b are provided with an air introduction passage 4 for introducing air to a cleaner box 22 mentioned later. Further, each of the main frames 3a and 3b is formed in such a manner as to extend in a downward direction in a rear side as shown in Figs. 1 and 2. Further, a seat rail 5 extending in an upward direction in a rear side is connected to the main frames 3a and 3b as shown in Fig. 1. Further, a handle 6 is rotatably attached to the head pipe 2. Further, a front fork 7 is attached to a lower side of the handle 6. A front wheel 8 is rotatably attached to a lower end portion of the front fork 7.

Further, a front end portion of a swing arm 10 is attached to a rear end portion of the main frame 3a via a pivot shaft 9. A rear wheel 11 is rotatably attached to a rear end portion of the swing arm 10. Further, an engine 12 is mounted to a lower side of the main frames 3a and 3b.

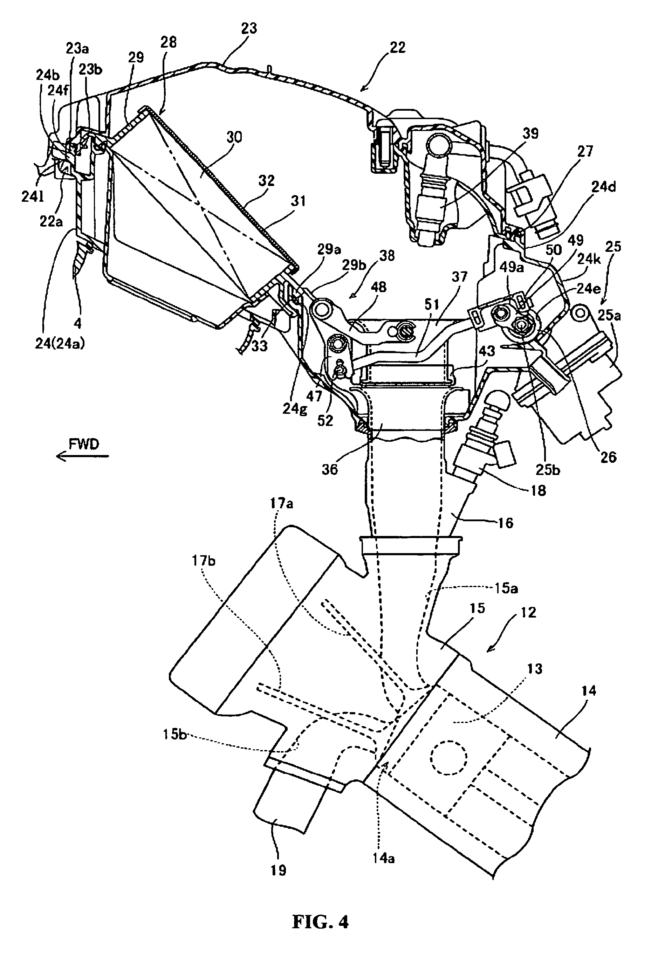

The engine 12 includes a piston 13, a cylinder 14, a cylinder head 15 and a throttle body 16, as shown in Fig. 4. The piston 13 is slidably fitted into an inner portion of the cylinder 14, and the cylinder head 15 is arranged in such a manner as to close one opening of the cylinder 14. Further, an air intake port 15a and an exhaust port 15b are formed in the cylinder head 15. The air intake port 15a is provided for feeding air-fuel mixture including air and fuel to a combustion chamber 14a of the cylinder 14. Further, the exhaust port 15b is provided for discharging residual gas after burning from the combustion chamber 14a of the cylinder 14. Further, an air intake valve 17a and an exhaust valve 17b are respectively arranged in the air intake port 15a and the exhaust port 15b. The throttle body 16 is attached to an opening of the air intake port 15a. Further, an injector 18 for injecting the fuel to the air intake port 15a is attached to the throttle body 16. Further an exhaust pipe 19 is attached to an opening of the exhaust port 15b, and a muffler 20 (see Fig. 1) is connected to the exhaust pipe 19. In this case, only one cylinder 14 is illustrated in Fig. 4, however, four cylinders 14 are actually arranged so as to be spaced at a predetermined interval in a width direction of a vehicle body. In other words, the engine 12 of the motorcycle 1 in accordance with the present embodiment is constituted by an in-line four-cylinder engine.

Further, as shown in Fig. 1, there is provided a front cowl 21 including an upper cowl 21a and a lower cowl 21b in such a manner as to cover a forward side of the vehicle body. Further, as shown in Figs. 2 and 3, a cleaner box 22 to which the air is fed from the air introduction passage 4 is arranged between the main frames 3a and 3b which are branched in the vehicle width direction. In this case, the cleaner box 22 corresponds to one example of an "air chamber" of the present invention.

Specifically, the cleaner box 22 is arranged in an upstream side of the throttle body 16 of the engine 12, as shown in Fig. 4, and is constructed by an upper box portion 23 and a lower box portion 24. In this case, the upper box portion 23 corresponds to one example of an "upper case portion", and the lower box portion 24 corresponds to one example of a "lower case portion" of the present invention. Further, as shown in Fig. 2, a main body portion 24a of the lower box portion 24 is arranged between the main frames 3a and 3b which are branched in the vehicle width direction.

In this case, in the present embodiment, the main body portion 24a of the lower box portion 24 is formed in such a manner as to be open to an upper side, as shown in Figs. 3 and 4. An outer peripheral edge 241 near the upper side of the main body portion 24a of the lower box portion 24 is formed in such a manner as to protrude to an outer side. Further, in the outer peripheral edge 241 near the upper side which is protruded to the outer side of the main body portion 24a, an engagement surface portion 24b is provided along the outer peripheral edge 241 near the upper side of the main body portion 24a in such a manner as to protrude toward an outer side. In this case, the engagement surface portion 24b corresponds to one example of a "first engagement portion" of the present invention. Further, both end portions in the vehicle width direction of the engagement surface portion 24b are respectively arranged just above the main frames 3a and 3b and near the upper ends of the main frames 3a and 3b, as shown in Figs. 2 and 3. In other words, the lower box portion 24 is structured, as shown in Fig. 2, such that a large space is not generated between each of lower surfaces 24c in both end portions in the vehicle width direction of the engagement surface portion 24b and each of the upper end surfaces 3c of the main frames 3a and 3b.

Further, in the present embodiment, a motor 25 for moving movable funnels 37 mentioned later is attached to a side surface portion 24d in a rear side of the lower box portion 24. In this case, the motor 25 corresponds to one example of a "predetermined part" and an "actuator" of the present invention. Specifically, the main body portion 25a of the motor 25 is attached to an outer side of the lower box portion 24. In this case, the side surface portion 24d corresponds to one example of a "side portion" of the present invention. Further, the motor 25 is arranged between the main frame 3a and the main frame 3b which are formed in such a manner as to be branched in the vehicle width direction, as shown in Fig. 3. Further, an opening portion 24e is formed in a portion, to which the motor 25 is attached, of the lower box portion 24, as shown in Figs. 3 and 4, and a grommet 26 is fitted into the opening portion 24e. Further, a rotating shaft 25b protruding from the main body portion 25a of the motor 25 is inserted into an inner portion of the lower box portion 24 via the grommet 26. In other words, the motor 25 is attached to the lower box portion 24 in such a manner that only the rotating shaft 25b is arranged in the inner portion of the lower box portion 24 in a state in which an outer side and an inner side of the lower box portion 24 are sealed.

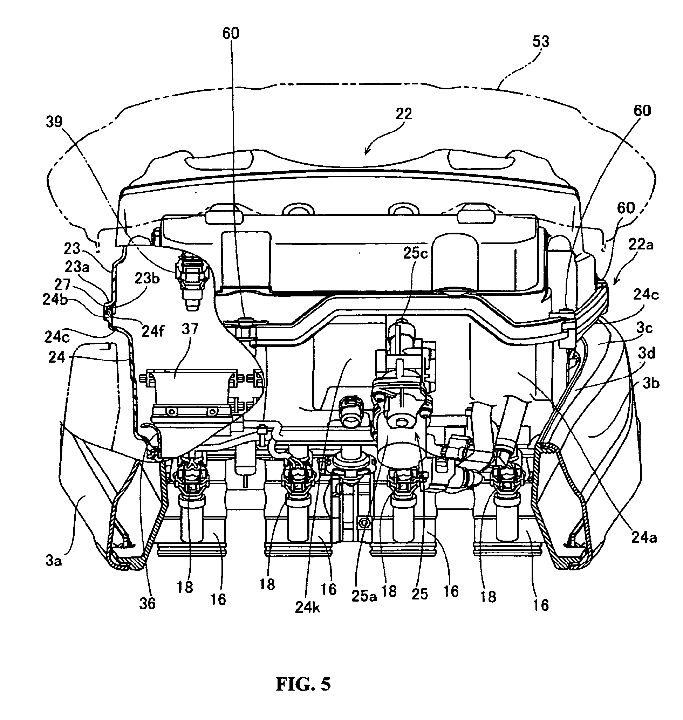

Further, in the present embodiment, the motor 25 is structured such that the upper end portion 25c of the main body portion 25a is positioned in an upper side than a portion 3d corresponding to a side portion in the vehicle width direction in which the motor 25 is arranged in each of the upper end surfaces 3c of the main frames 3a and 3b, as seen from the side direction of the motorcycle 1, as shown in Fig. 2. In this case, the portion 3d corresponds to one example of an "upper end portion of a part of the frame portion" of the present invention. Further, as shown in Fig. 5, a portion corresponding to the portion to which the motor 25 is attached in the engagement surface portion 24b of the lower box portion 24 is formed in such a manner as to protrude to an upper side than the other portions than the portion corresponding to the portion to which the motor 25 is attached in the engagement surface portion 24b, as seen from the rear side of the motorcycle 1. Accordingly, it is possible to attach the motor 25 to the side surface portion 24d in the rear side of the lower box portion 24 without wholly enlarging a magnitude in a vertical direction of the lower box portion 24. In other words, the lower box portion 24 in accordance with the present embodiment is structured such that a length in the vertical direction of the lower box portion 24 is made larger at the portion corresponding to the portion in which the motor 25 is arranged in the lower box portion 24. As a result, it is possible to inhibit the position of each of the lower surfaces 24c of both end portions in the vehicle width direction of the engagement surface portion 24b of the lower box portion 24 from coming away from each of the upper end surfaces 3c of the main frame 3a and 3b, regardless of the magnitude in the vertical direction of the motor 25.

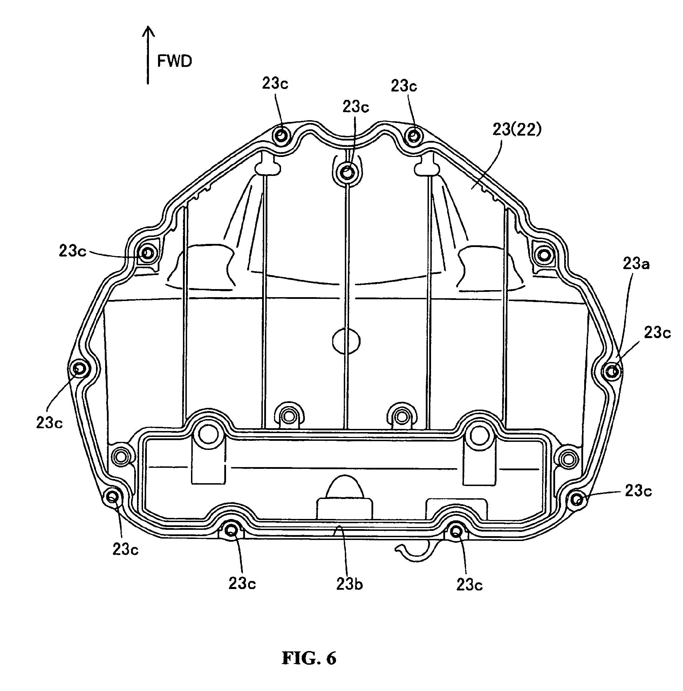

Further, in the present embodiment, a convex portion 24f is integrally formed in the engagement surface portion 24b of the lower box portion 24 over a whole periphery of the engagement surface portion 24b in such a manner as to protrude to an upper side, as shown in Figs. 3 and 4. Further, an engagement surface portion 23a is formed in the upper box portion 23 provided in the upper side of the lower box portion 24 in such a manner as to correspond to the engagement surface portion 24b (see Fig. 4) of the lower box portion 24, as shown in Figs. 4 and 6. In this case, the engagement surface portion 23a corresponds to one example of a "second engagement portion". A concave portion 23b is formed in the engagement surface portion 23a in such a manner as to protrude to a lower side, and the concave portion 23b is structured in such a manner as to engage with the convex portion 24f (see Fig. 4) of the engagement surface portion 24b of the lower box portion 24. Further, a rubber seal member 27 is arranged between the concave portion 23b of the upper box portion 23 and the convex portion 24f of the lower box portion 24, as shown in Fig. 4. A mating face 22a between the lower box portion 24 and the upper box portion 23 is structured in the cleaner box 22 on the basis of an engagement between the engagement surface portion 24b of the lower box portion 24 and the engagement surface portion 23a of the upper box portion 23, in the manner mentioned above. Accordingly, as shown in Fig. 5, in the same manner as the case of the engagement surface portion 24b, a portion corresponding to the portion to which the motor 25 is attached in the mating surface 22a is formed in such a manner as to protrude to an upper side than the other portions than the portion corresponding to the portion to which the motor 25 is attached in the mating face 22a, as seen from the rear side of the motorcycle 1.

Further, an air filter 28 for purifying the air fed from the air introduction passage 4 is arranged within the lower boxportion 24 of the cleanerbox 22, as shown in Fig. 4. Further, the air filter 28 is constituted by a resin main body portion 29, a filter element 30 (see Fig. 4), a quenching net 31 and a cover portion 32, as shown in Figs. 3 and 4. A convex portion 29a is integrally formed in an edge portion of the main body portion 29 of the air filter 28 over a whole periphery, as shown in Fig. 4. Further, a concave portion 24g is integrally formed in the lower box portion 24 in such a manner as to correspond to the convex portion 29a of the air filter 28. Further, a rubber seal member 33 is arranged between the concave portion 24g of the lower box portion 24 and the convex portion 29a of the main body portion 29 of the air filter 28. Further, the air filter 28 is fixed in a state in which the air filter 28 is sandwiched by the upper box portion 23 and the lower box portion 24 of the cleaner box 22. Further, a come-off preventing portion 29b for inhibiting a screw 62 (see Fig. 3) mentioned later from getting out to an upper side is integrally formed in the main body portion 29 of the air filter 28, as shown in Figs. 3 and 4.

Further, the air filter 28 is arranged in a state in which the air filter 28 is sandwiched by the upper box portion 23 and the lower box portion 24 in the inner portion of the cleaner box 22, as shown in Fig. 4. Further, the upper box portion 23 is screwed to thread holes 24h (see Fig. 3) of the lower box portion 24 via screw insertion holes 23c (see Fig. 6) of the upper box portion 23 by eleven screws 60 (see Fig. 5), as shown in Figs. 3 and 5. Accordingly, it is possible to fix the air filter 28 in a state in which the air filter 28 is sandwiched by the upper box portion 23 and the lower box portion 24. In this case, the screw 60 inserted into the screw insertion hole 23c formed in a center portion in the vehicle width direction of a front portion of the upper box portion 23 is screwed to the lower box portion 24 via a screw insertion hole 29c (see Fig. 3) of the air filter 28.

Further, two fixing portions 24i in the front portion of the lower box portion 24 are fixed to front end portions of the main frames 3a and 3b via a fixing bracket 34 by connecting members 35a and 35b, as shown in Fig. 3.

Further, in the present embodiment, as shown in Figs. 3 and 4, fixed funnels 36, the movable funnels 37 and a funnel moving mechanism portion 38 which are arranged in an upstream side of the engine 12 (see Fig. 4) and a downstream side (a clean side) of the air filter 28 are provided within the cleaner box 22. The fixed funnel 36 and the movable funnel 37 are provided in such a manner as to correspond to each of the cylinders 14 (see Fig. 4) of the engine 12 (see Fig. 4). Further, the fixed funnels 36 are fixed to the lower box portion 24 of the cleaner box 22, and have a function of introducing the purified air within the cleaner box 22 to the air intake ports 15a (see Fig. 4). Further, the movable funnels 37 are arranged in an air intake side (an upstream side) of the fixed funnels 36, and have a function of introducing the purified air within the cleaner box 22 to the air intake ports 15a (see Fig. 4) together with the fixed funnels 36.

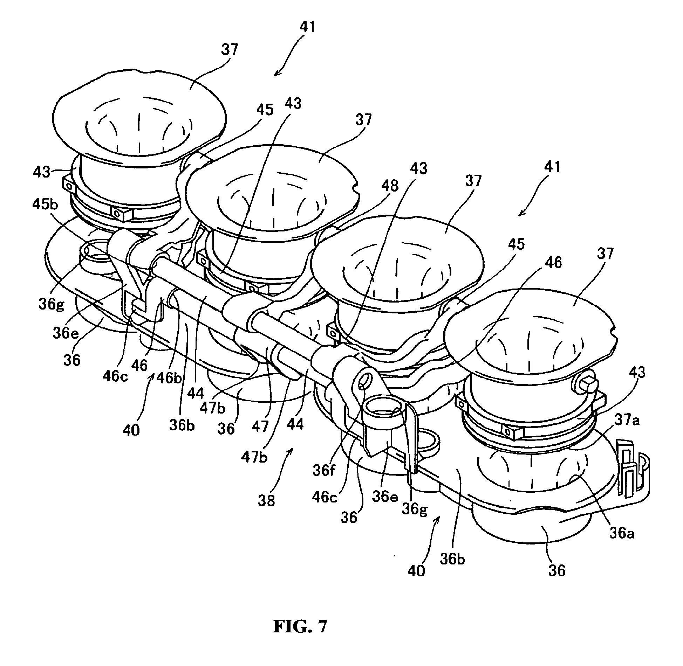

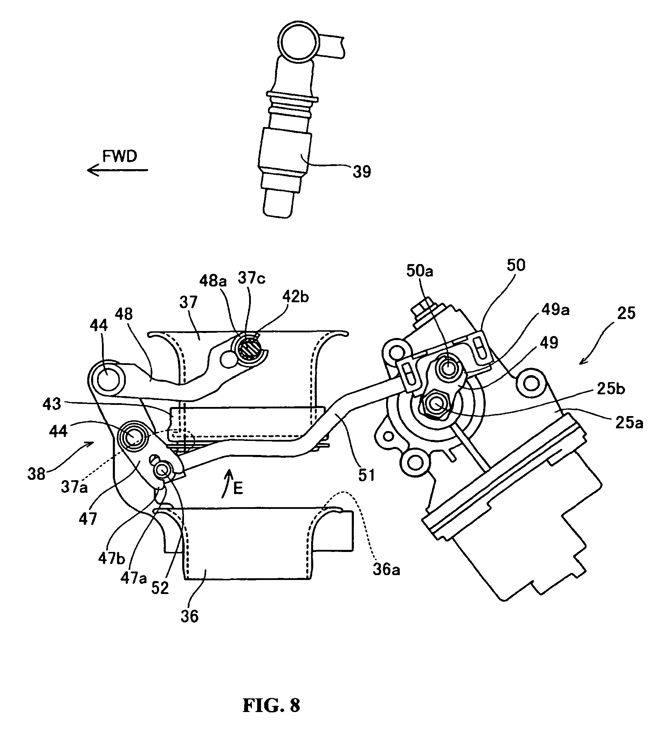

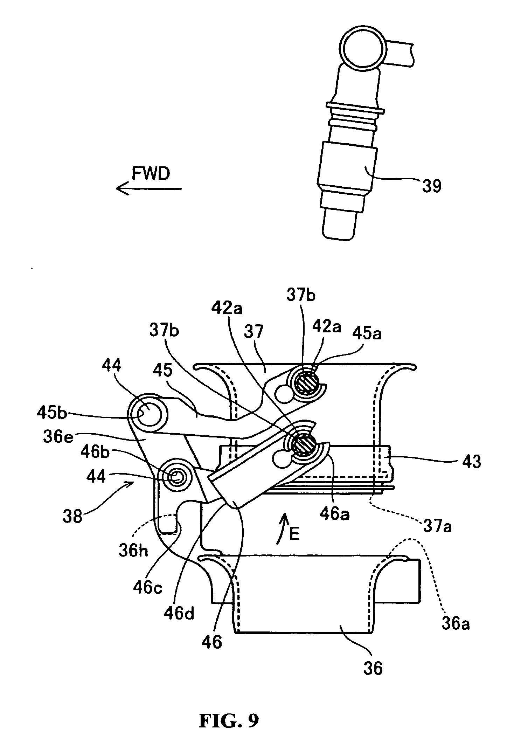

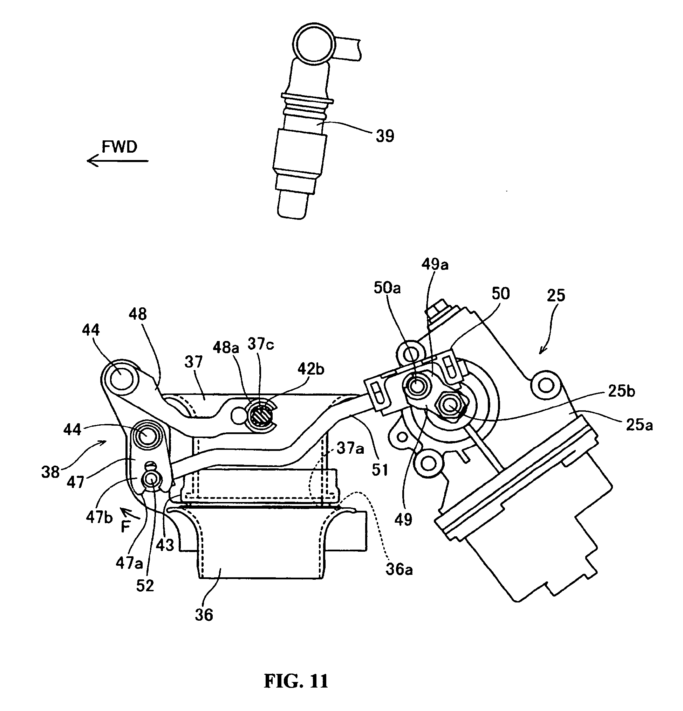

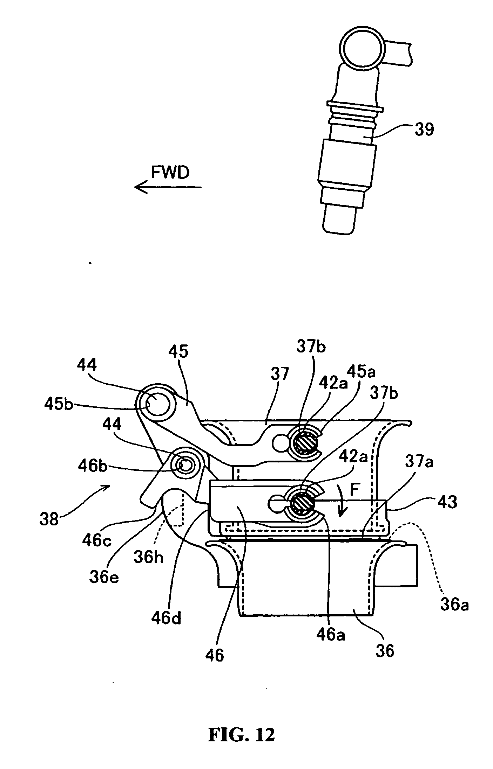

Further, as shown in Figs. 7 to 12, the movable funnel 37 is structured such as to be movable between an away or separated position (a state in Figs. 8 and 9) at which an opening portion 37a in the fixed funnel 36 side separates from an opening portion 36a in an air intake side of the fixed funnel 36, and a contact position (a state in Figs. 11 and 12) at which the opening portion 37a of the movable funnel 37 is brought into contact with the opening portion 36a of the fixed funnel 36. In this case, as shown in Fig. 7, in the case that the movable funnel 37 is moved to the away or separated position (the sate in Figs. 8 and 9), an air intake pipe connected to the cylinder 14 (see Fig. 4) fromthecleanerbox22 (see Fig. 4) is constructed by the fixed funnel 36, the throttle body 16 (see Fig. 4) and the air intake port 15a (see Fig. 4) . On the other hand, as shown in Fig. 4, in the case that the movable funnel 37 is moved to the contact position (the state in Figs. 11 and 12), the air intake pipe connected to the cylinder 14 from the cleaner box 22 is constructed by the movable funnel 37, the fixed funnel 36, the throttle body 16 and the air intake port 15a. Further, the funnel moving mechanism portion 38 has a function of moving the movable funnel 37 between the separated and contact positions.

Further, an injector 39 is attached to an upper portion of the upper box portion 23 of the cleaner box 22, as shown in Fig. 4. The injector 39 is provided for injecting the fuel to the air intake port 15a together with the injector 18 in a state in which the engine 12 rotates at a high speed. Further, the injector 39 is arranged in an upper side of the movable funnel 37.

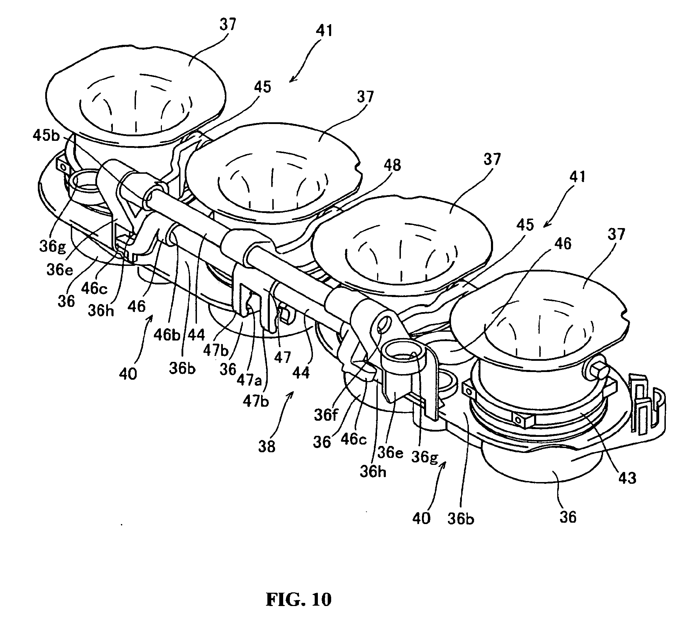

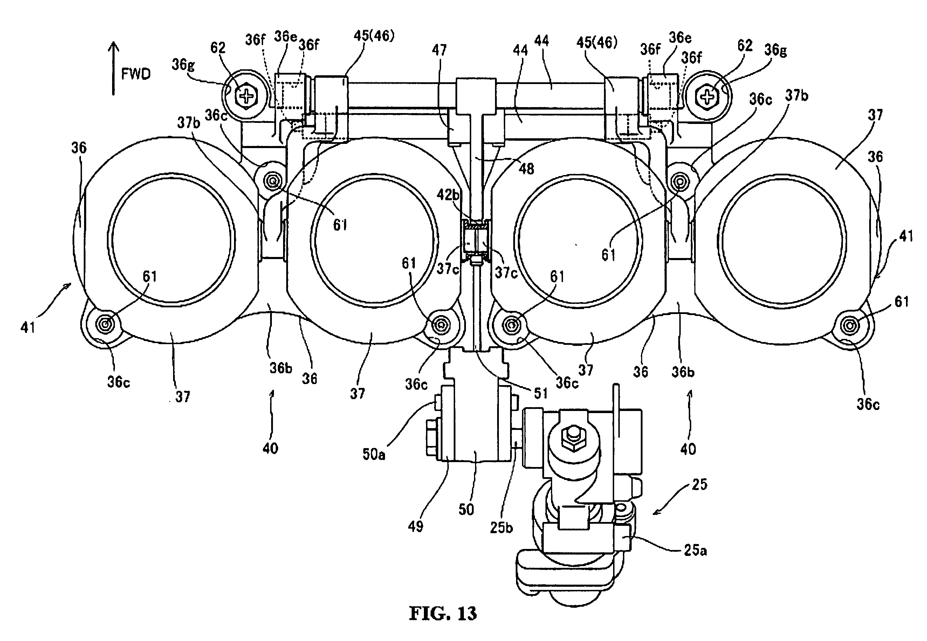

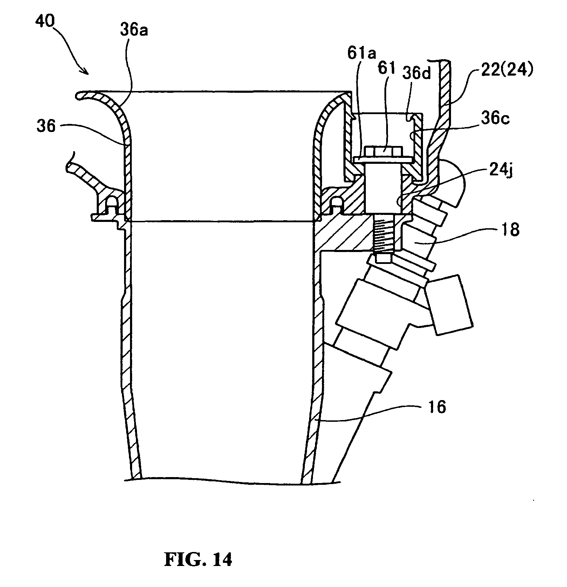

Further, the fixed funnel 36 has a structure in which two adjacent fixed funnels 36 are integrally formed via a connection portion 36b, as shown in Figs. 7 and 10. In other words, the present embodiment is provided with two parts 40 obtained by integrating two adjacent fixed funnels 36. Further, the part 40 obtained by integrating two fixed funnels 36 is provided with three screw insertion holes 36c into which a screw 61 is inserted, as shown in Fig. 13. Further, as shown in Fig. 14, the fixed funnel 36 (the part 40) is attached to the throttle body 16 together with the cleaner box 22 (the lower box portion 24) by the screw 61 inserted into the screw insertion hole 36c. In this case, the lower box portion 24 of the cleaner box 22 is also provided with a screw insertion hole 24j into which the screw 61 is inserted. Further, an engagement portion 36d is provided in an inner surface of the screw insertion hole 36c of the fixed funnel 36 (the part 40) . Accordingly, since a head portion 61a of the screw 61 can be engaged with the engagement portion 36d even in a state before the screw 61 is attached to the throttle body 16, it is possible to inhibit the screw 61 from coming off to an upper side from the screw insertion hole 36c.

Further, as shown in Fig. 7, a support column 36e is integrally provided in each of the parts 40 obtained by integrating two fixed funnels 36. A pair of rotating shaft support holes 36f for rotatably supporting an end portion of a rotating shaft 44 mentioned later are formed in the support columns 36e, as shown in Fig. 13.

Further, as shown in Fig. 7, a fixing hole 36g is provided in each of the support columns 36e of two parts 40. Further, the fixing hole 36g of each of the support columns 36e is screwed to the lower box portion 24 (see Fig. 3) by a screw 62, as shown in Fig. 13. Further, a front portion of each of two support columns 36e is provided with a regulation portion 36h (see Figs. 9 and 12) with which a stopper 46c mentioned later is brought into contact, as shown in Fig. 7, in the case an opening portion 37a (see Figs. 8 and 9) in the fixed funnel 36 side of the movable funnel 37 is positioned at an away position (a state in Fig. 7) at which the opening portion 37a is away from an opening portion 36a (see Figs. 8 and 9) in the air intake side of the fixed funnel 36. Each of the regulation portions 36h is formed as a concave shape from a front portion of the support column 36e toward a rear side.

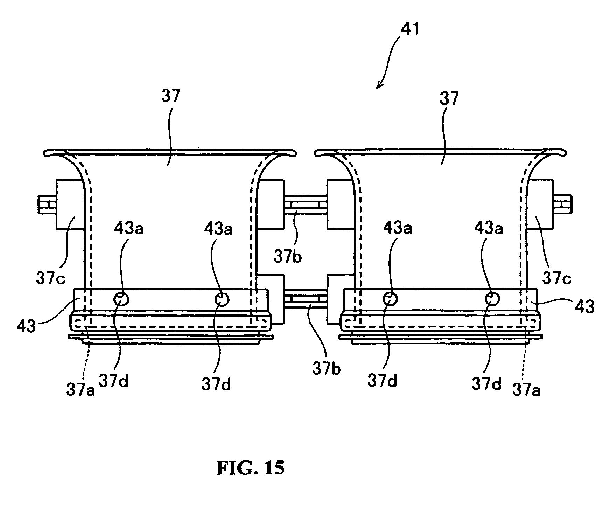

Further, the movable funnel 37 has a structure in which two adjacent movable funnels 37 are integrally formed via a pair of support shafts 37b (see Fig. 15), as shown in Figs. 13 and 15. In other words, the present embodiment includes two parts 41 obtained by integrating two adjacent movable funnels 37. Further, the support shafts 37b are arranged between two movable funnels 37 of the parts 41.

Further, split bushes 42a are installed to the support shafts 37b of the movable funnel 37 (the part 41), as shown in Fig. 9. The split bushes 42a have a function for rotating an upper link lever 45 and a lower link lever 46 mentioned later with respect to the support shaft 37b. Further, the split bush 42b is installed to support shafts 37c positioned between the parts 41 obtained by integrating two movable funnels 37, as shown in Fig. 13. In this case, only one split bush 42b positioned between the parts 41 obtained by integrating two movable funnels 37 is installed so as to stride over two support shafts 37c.

Further, as shown in Figs. 7 and 10, a rubber seal member 43 is installed to a lower end portion in the fixed funnel 36 side of the movable funnel 37. The seal member 43 is provided with four engagement holes 43a as shown in Fig. 15, and four convex portions 37d of the movable funnel 37 are engaged with the engagement holes 43a. Accordingly, it is possible to inhibit the seal member 43 from falling off to a lower side from a lower end portion of the movable funnel 37.

Further, as shown in Figs. 9 and 12, the funnel moving mechanism portion 38 is structured such as to freely move the movable funnel 37 between the away or separated position (the state in Figs. 8 and 9) and the contact position (the state in Figs. 11 and 12) by using an upper link lever 45 and a lower link lever 46 which are mentioned later. As a specific structure of the funnel moving mechanism portion 38, an end portion of the rotating shaft 44 is rotatably supported with a rotating shaft support hole 36f (see Fig. 13) of the support column 36e provided in the fixed funnel 36 (the part 40), as shown in Figs. 7 and 13. Further, as shown in Fig. 13, the resin upper link lever 45 is attached to each of one end portion side and the other end portion side of the rotating shaft 44 in the upper side so as to rotate together with the rotating shaft 44 in the upper side. Further, the resin lower link lever 46 is attached to each of one end portion side and the other end portion side of the rotating shaft 44 in the lower side so as to rotate together with the rotating shaft 44 in the lower side.

The upper link lever 45 has a fitting portion 45a and a rotating shaft insertion hole 45b into which the rotating shaft 44 in the upper side is inserted, as shown in Figs. 9 and 12. The support shaft 37b in the upper side of the movable funnel 37 is fitted into the fitting portion 45a of the upper link lever 45 via the split bush 42a. Accordingly, the upper link lever 45 is rotatable with respect to the support shaft 37b in the upper side.

Further, the lower link lever 46 has a fitting portion 46a, a rotating shaft insertion hole 46b into which the rotating shaft 44 in the lower side is inserted, and two stoppers 46c and 46d. The support shaft 37b in the lower side of the movable funnel 37 is fitted into the fitting portion 46a of the lower link lever 46 via the split bush 42a. Accordingly, the lower link lever 46 is rotatable with respect to the support shaft 37b in the lower side. Further, as shown in Fig. 9, the stopper 46c of the lower link lever 46 has a function of regulating the rotation in a direction E of the lower link lever 46 on the basis of a contact with the regulating portion 36h of the support column 36e of the fixed funnel 36 in the case that the lower link lever 46 is rotated a predetermined amount in the direction E (in the case that the movable funnel 37 reaches the away position). Further, as shown in Fig. 12, the stopper 46d of the lower link lever 46 has a function of regulating the rotation in a direction F of the lower link lever 46 on the basis of a contact with a rear portion of the support column 36e of the fixed funnel 36 in the case that the lower link lever 46 is rotated a predetermined amount in the direction F (in the case that the movable funnel 37 reaches the contact position).

Further, as shown in Figs. 7 and 10, the rotating shaft 44 in the lower side is provided with a support portion 47 rotating together with the rotating shaft 44. The support portion 47 is constructed by a pair of sandwiching pieces 47b in each of which a notch portion 47a (see Fig. 10) is formed.

Further, as shown in Figs. 8 and 11, an intermediate link lever 48 is rotatably attached to the split bush 42b installed to the support shaft 37c positioned between the parts 41. Specifically, a fitting portion 48a capable of engaging with the split bush 42b is formed in one side of the intermediate link lever 48. Further, the fitting portion 48a is rotatably engaged with the split bush 42b. Further, a rotating shaft 44 is attached to the other side of the intermediate link lever 48 in such a manner that the other side of the intermediate link lever 48 rotates together with the rotating shaft 44 in the upper side.

Since the support portion 47, the upper link lever 45 and the lower link lever 46 are structured as mentioned above, as shown in Figs. 8 and 9, the movable funnel 37 is moved in a direction in which the movable funnel 37 moves away from the fixed funnel 36, in the case of rotating the lower link lever 4 6 (see Fig. 9) in the direction E by rotating the support portion 47 (see Fig. 8) in the direction E. Further, as shown in Figs. 11 and 12, in the case of rotating the lower link lever 46 (see Fig. 12) in the direction F by rotating the support portion 47 (see Fig. 11) in the direction F, the movable funnel 37 is moved in a direction in which the movable funnel 37 comes close to the fixed funnel 36.

Further, in the present embodiment, as shown in Fig. 13, the upper link lever 45 and the lower link lever 46 (see Fig. 7) are structured such as to be rotated by a driving force of the motor 25 mentioned above. Specifically, one end portion of a rotary lever 49 is attached to the rotating shaft 25b of the motor 25 inserted into an inner portion of the lower box portion 24, as shown in Fig. 8. A sandwiching portion 49a formed as a notch shape is provided in the other end portion of the rotary lever 49.

The rotary lever 49 is arranged in a protruding portion 24k of the lower box portion 24 of the cleaner box 22, as shown in Fig. 4. Further, a protruding portion 50a provided in both side surfaces of the moving member 50 is attached to the sandwiching portion 49a of the rotary lever 49 so as to freely swing with respect to the sandwiching portion 49a, as shown in Fig. 8. Further, one end of a moving shaft 51 is arranged in an inner portion of the moving member 50. Further, the moving shaft 51 is arranged between two parts 41 (the movable funnels 37) as shown in Fig. 13. Further, a support shaft 52 is provided in the other end of the moving shaft 51, as shown in Fig. 8. A notch portion 47a of the support portion 47 rotating together with the rotating shaft 44 in the lower side is engaged with the support shaft 52.

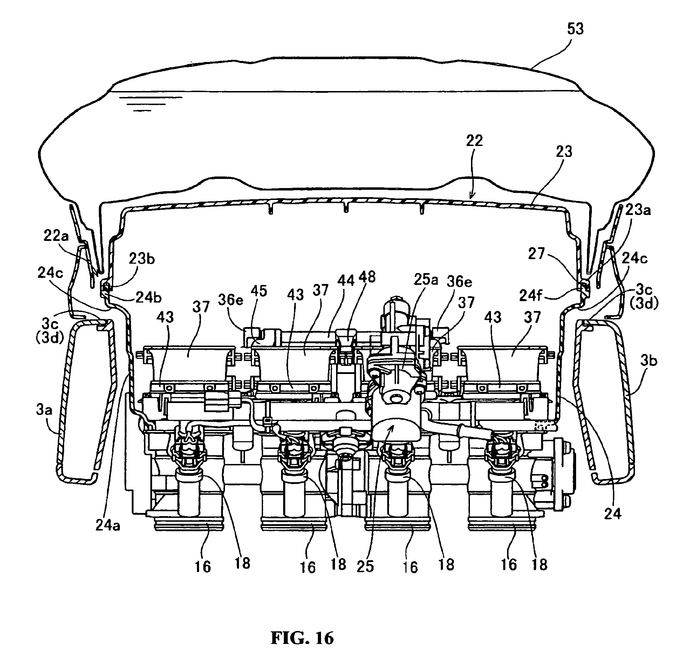

Further, in the present embodiment, a fuel tank 53 is provided in an upper side of the cleaner box 22 so as to cover an upper side of the upper box portion 23, as shown in Fig. 5. Further, the fuel tank 53 is structured such as to cover at least a part of the main frames 3a and 3b in addition to the upper side of the upper box portion 23 in the vehicle width direction, as shown in Figs. 5 and 16. Specifically, the fuel tank 53 is structured such that both end portions in the vehicle width direction of the fuel tank 53 come to an outer side from both ends of each of the main frames 3a and 3b in the vehicle width direction.

Further, in the present embodiment, the fuel tank 53 is structured such as to cover at least a part of the side portion in the vehicle width direction of the upper box portion 23 in addition to the upper side of the upper box portion 23. In other words, the fuel tank 53 is formed along the upper side and the side portion in the vehicle width direction of the upper box portion 23. Accordingly, lower ends of both side portions in the vehicle width direction of the fuel tank 53 are positioned just above the engagement surface portion 23a of the upper box portion 23. Further, as mentioned above, the engagement surface portion 24b of the lower box portion 24 corresponding to the engagement surface portion 23a is structured such as to be positioned just above the upper ends of the main frames 3a and 3b. As a result, in comparison with the case that the large space is generated between each of the lower surfaces 24c of both end portions in the vehicle width direction of the engagement surface portion 24b and each of the upper end surfaces 3c of the main frames 3a and 3b, it is possible to effectively utilize the space near the lower box portion 24. Accordingly, in comparison with the case that the large space is generated between each of the lower surfaces 24c of both end portions in the vehicle width direction of the engagement surface portion 24b and each of the upper end surfaces 3c of the main frames 3a and 3b, it is possible to enlarge a capacity of the fuel tank 53. Further, a seat 54 is arranged in a rear side of the fuel tank 53.

In the present embodiment, as mentioned above, it is possible to inhibit the large space frombeing generated between the upper end surface 3c of each of the main frames 3a and 3b, and the mating face 22a between the upper box portion 23 and the lower box portion 24, by arranging the mating face 22a between the upper box portion 23 and the lower box portion 24 near the upper end surface 3c of each of the main frames 3a and 3b. Accordingly, it is possible to inhibit a relative position of the mating face 22a between the upper box portion 23 and the lower box portion 24 of the cleaner box 22 with respect to the main frames 3a and 3b from becoming high. As a result, in comparison with the case that the space is generated between the upper end surface 3c of each of the main frames 3a and 3b, and the mating face 22a between the upper box portion 23 and the lower box portion 24, it is possible to effectively utilize the space in the upper portion of the cleaner box 22. Specifically, it is possible to secure the space for arranging the fuel tank 53. Further, it is possible to inhibit the interference of the motor 25 with the fuel piping (not shown) of the engine 12 caused by the motor 25 being arranged in the lower side, by structuring the upper end portion 25c of the motor 25 such as to be positioned in the upper side than the portion 3d corresponding to the side portion in the vehicle width direction in which the motor 25 is arranged, in the upper end surface 3c of each of the main frames 3a and 3b as seen from the side portion of the motorcycle 1.

The present embodiment is provided with the lower box portion 24 including the engagement surface portion 24b in which both end portions in the vehicle width direction are arranged near the upper end surface 3c of each of the main frames 3a and 3b, and the motor 25 attached to the side surface portion 24d in the rear side of the lower box portion 24, as mentioned above. Further, the motor 25 is arranged in such a manner that the upper end portion 25c is positioned in the upper side than the portion 3d corresponding to the side portion in the vehicle width direction in which the motor 25 is arranged, in the upper end surface 3c of each of the main frames 3a and 3b. Even in the case that the motor 25 is provided in the side surface portion 24d in the rear side of the lower box portion 24 as mentioned above, it is possible to inhibit the large space from being generated between each of the lower surfaces 24c of the engagement surface portion 24b and each of the upper end surfaces 3c of the main frames 3a and 3b, by arranging both end portions in the vehicle width direction of the engagement surface portion 24b of the lower box portion 24 near each of the upper end surfaces 3c of the main frames 3a and 3b. As a result, it is possible to effectively utilize the space near the lower box portion 24.

Further, in the present embodiment, it is possible to obtain the motorcycle 1 which can regulate the movement of the movable funnel 37, by attaching the motor 25 for moving the movable funnel 37 to the side surface portion 24d of the lower box portion 24 as mentioned above.

Further, in the present embodiment, the portion corresponding to the portion to which the motor 25 is attached in the engagement surface portion 24b of the lower box portion 24 is formed in such a manner as to protrude to the upper side than the other portions than the portion corresponding to the portion to which the motor 25 is attached in the engagement surface portion 24b, as mentioned above. Accordingly, it is possible to attach the motor 25 to the side surface portion 24d in the rear side of the lower box portion 24 without wholly enlarging the length in the vertical direction of the lower box portion 24.

Further, in the present embodiment, the portion corresponding to the portion to which the motor 25 is attached in the mating face 22a is formed in such a manner as to protrude to the upper side than the other portions than the portion corresponding to the portion to which the motor 25 is attached in the mating face 22a, as mentioned above. Accordingly, it is possible to arrange the other portions than the portion corresponding to the portion to which the motor 25 is attached in the mating face 22a of the cleaner box 22 at the lower position in comparison with the portion corresponding to the portion to which the motor 25 is attached in the mating face 22a.

Further, in the present embodiment, each of the lower surfaces 24c of both end portions of the engagement surface portion 24b of the lower box portion 24 is arranged just above each of the upper end surfaces 3c of the main frames 3a and 3b, as mentioned above. Accordingly, it is possible to inhibit the large space from being generated between each of the lower surfaces 24c of both end portions of the engagement surface portion 24b, and each of the upper end surfaces 3c of the main frames 3a and 3b from being generated.

Further, in the present embodiment, the motor 25 is arranged in the side portion positioned between the main frame 3a and the main frame 3b of the lower box portion 24, as mentioned above. Accordingly, it is possible to easily arrange each of the lower surfaces 24c of both end portions of the engagement surface portion 24b of the lower box portion 24 just above each of the upper end surfaces 3c of the main frames 3a and 3b.

Further, in the present embodiment, the convex portion 24f is provided in the engagement surface portion 24b of the lower box portion 24 so as to protrude to the upper side, and the concave portion 23b is provided in the engagement surface portion 23a of the upper box portion 23 so as to protrude to the lower side and engage with the engagement surface portion 24b of the lower box portion 24, as mentioned above. Since the convex portion 24f is fitted into the concave portion 23b, it is possible to engage the engagement surface portion 24b and the engagement surface portion 23a.

Further, the present embodiment is provided with the seal member 27 for sealing between the concave portion 23b of the upper box portion 23 and the convex portion 24f of the lower box portion 24, as mentioned above. By using the seal member 27, it is possible to easily seal between the engagement surface portion 23a of the upper box portion 23 and the engagement surface portion 24b of the lower box portion 24.

Further, the present embodiment is provided with the fuel tank 53 arranged so as to cover the upper side of the upper box portion 23, as mentioned above. It is possible to easily enlarge the capacity of the fuel tank 53 by arranging the fuel tank 53 so as to cover the upper side of the upper box portion 23.

Further, in the present embodiment, the fuel tank 53 is structured such as to cover at least a part of the upper side of the main frames 3a and 3b in addition to the upper side of the upper box portion 23, in the vehicle width direction, as mentioned above. Specifically, the fuel tank 53 is structured such that both end portions in the vehicle width direction of the fuel tank 53 come to an outer side than both ends in the vehicle width direction of each of the main frames 3a and 3b. Accordingly, in comparison with the case that the fuel tank 53 covers only the upper side of the upper box portion 23, it is possible to further enlarge the capacity of the fuel tank 53. Further, in the present embodiment, the fuel tank 53 is structured such as to cover at least a part of the side portion of the upper box portion 23 in addition to the upper side of the upper box portion 23, as mentioned above. It is possible to further enlarge the capacity of the fuel tank 53 by arranging the fuel tank 53 so as to wrap the upper side of the upper box portion 23, as mentioned above.

Further, the present embodiment is provided with the air filter 28 which is arranged in the inner portion of the cleaner box 22, and purifies the air fed to the air intake port 15a of the engine 12, as mentioned above. Accordingly, it is possible to obtain the cleaner box 22 which can purify the air fed to the air intake port 15a.

In this case, the embodiment disclosed at this time should be considered to provide an exemplification in all the points and no limitative structure. The scope of the present invention is indicated by claims in place of the description of the embodiment mentioned above, and includes an equivalent meaning to the claims and all the modification within the scope.

For example, in the embodiment mentioned above, there is shown the example in which the present invention is applied to the motorcycle, however, the present invention is not limited to this, but can be applied to the other vehicles than the motorcycle.

Further, in the present embodiment, the present invention is applied to the vehicle on which the four-cylinder engine is mounted, however, the present invention is not limited to this, but can be applied to a vehicle on which the other multiple cylinder engine than four-cylinder engine is mounted, and a vehicle on which a one-cylinder engine is mounted.

Further, in the embodiment mentioned above, the present invention is applied to the vehicle on which the cleaner box arranging the air filter in the inner portion of the air chamber is amounted, however, the present invention is not limited to this, but the present invention may be applied to the vehicle on which the air chamber arranging no air filter in the inner portion is mounted.

Further, in the present embodiment, there is shown the example in which the motor is applied as the predetermined part attached to the air chamber in accordance with the present invention, however, the present invention is not limited to this. It is possible to apply, for example, a pressure sensor for detecting pressure in the inner portion of the engine or the cleaner box, an engine control unit (ECU), an injector and peripheral piping, wiring and attached member, a fuel pump, an electronic driving unit (EDU), an air pump and the like, as the predetermined parts of the present invention.

Further, in the present embodiment, there is shown the example in which both end portions in the vehicle width direction of the engagement surface portion of the lower box portion are arranged just above the upper end surfaces in both sides in the vehicle width direction of the main frame, however, the present invention is not limited to this, but may be structured such that only one of both end portions in the vehicle width direction of the engagement surface portion of the lower box portion is arranged just above the upper end surface in the vehicle width direction of any one main frame.

### Description of the Reference Numerals

- 1: motorcycle (vehicle)
- 2: head pipe
- 3a: main frame (frame portion, first frame portion)
- 3b: main frame (frame portion, second frame portion)
- 3c: upper end surface (upper end)
- 3d: portion (upper end)
- 12: engine
- 15a: air intake port
- 22: cleaner box (air chamber)
- 22a: mating face
- 23: upper box portion (upper case portion)
- 23a: engagement surface portion (second engagement portion)
- 23b: concave portion
- 24: lower box portion (lower case portion)
- 24b: engagement surface portion (first engagement portion)
- 24d: side elevational portion (side portion)
- 24f: convex portion
- 241: outer peripheral edge
- 25: motor (predetermined part)
- 25c: upper end portion
- 27: seal member
- 28: air filter
- 36: fixed funnel
- 37: movable funnel
- 53: fuel tank

## Claims

1. A vehicle (1) comprising:
a frame portion (3a, 3b);
an engine (12) having an air intake port (15a);
an air chamber (22) in communication with the intake port (15a) and including upper and lower side case portions (23, 24), wherein a mating face (22a) between said upper and lower case portions (23, 24) is arranged near an upper end of said frame portion (3a, 3b); and
a predetermined part (25) attached to a side surface of said air chamber (22), wherein an upper end portion of said predetermined part (25) is structured such as to be positioned above an upper end portion of a part of said frame portion (3a, 3b) as seen from a side direction of the vehicle (1); wherein
said lower case portion (24) includes a first engagement portion (24b) which is at least partly arranged near an upper end of said frame portion (3a, 3b),
wherein said upper case portion (23) includes a second engagement portion (23a) which is provided in such a manner as to correspond to the first engagement portion (24b) of said lower case portion (24), and is engaged with said first engagement portion (24b); and **characterised in that**
a portion of the first engagement portion (24b) of a side surface portion (24d) in a rear side of said lower case portion (24) corresponding to a portion to which said predetermined part (25) is attached is formed in such a manner as to protrude to an upper side higher than the other portions of said first engagement portion (24b) of the side surface portion (24d) to which said predetermined part (25) is not attached.

2. The vehicle (1) as claimed in claim 1, wherein said predetermined part (25) includes an actuator.

3. The vehicle (1) as claimed in claim 2, wherein said engine (12) is provided in a lower side of said lower case portion (24) and wherein said vehicle (1) further comprises:
a fixed funnel (36) provided in the air chamber (22) and adapted to introduce air to said air intake port (15a) of said engine (12); and
a movable funnel (37) arranged movably in an air intake port side of said fixed funnel (36) and adapted to conduct air to the air intake port (15a) of said engine (12) together with said fixed funnel (36), and
wherein said actuator (25) is provided for moving said movable funnel.

4. The vehicle (1) as claimed in any of the preceding claims, wherein the mating face (22a) between said lower case portion (24) and said upper case portion (23) is structured on the basis of an engagement between the first engagement portion (24b) of said lower case portion (24) and the second engagement portion (23a) of said upper case portion (23), and
wherein a portion of said mating face (22a) corresponding to the portion to which said predetermined part (25) is attached is formed in such a manner as to protrude to an upper side than the other portions of said mating face (22a) to which said predetermined part (25) is not attached.

5. The vehicle (2) as claimed in any of the preceding claims, wherein an outer peripheral edge near an upper end of said lower case portion (24) is formed in such a manner as to protrude to an outer side,
wherein a first engagement portion (24b) of said lower case portion (24) is provided along an outer peripheral edge near an upper end portion protruded to the outer side of said lower case portion (24), and
wherein at least a part of the first engagement portion (24b) of said lower case portion (24) is arranged above said frame portion (3a, 3b).

6. The vehicle (1) as claimed in any of the preceding claims, wherein said frame portion (3a, 3b) includes a first frame portion (3a) and a second frame portion (3b) which are formed in such a manner as to be branched in a vehicle width direction,
wherein said lower case portion (24) is arranged between said first and second frame portions (3a, 3b), and
wherein the first engagement portion (24b) of said lower case portion (24) is arranged near upper ends of said first and second frame portions (3a, 3b).

7. The vehicle (1) as claimed in any preceding claim, wherein said frame portion (3a, 3b) includes a first frame portion (3a) and a second frame portion (3b) which are formed in such a manner as to be branched in a vehicle width direction, and
wherein said predetermined part (25) is arranged in a side portion of said lower case portion (24) positioned between said first and second frame portions (3a, 3b).

8. The vehicle (1) as claimed in any of the preceding claims, wherein the first engagement portion (24b) of said lower case portion (24) includes a convex portion (24f) provided in such a manner as to protrude to an upper side, and
wherein the second engagement portion (23a) of said upper case portion (23) includes a concave portion (23b) provided in such a manner as to protrude to a lower side and engage with the convex portion (24f) of said lower case portion (24).

9. The vehicle (1) as claimed in claim 8, further comprising a seal member (27) for sealing between the concave portion (23b) of said upper case portion (23) and the convex portion (24f) of said lower case portion (24).

10. The vehicle (1) as claimed in any preceding claim, further comprising a fuel tank (53) arranged in such a manner as to cover an upper side of said upper case portion (23).

11. The vehicle (1) as claimed in claim 10, wherein said fuel tank (53) is structured such as to cover at least a part of the upper side of said frame portion (3a, 3b) in addition to the upper side of said upper case portion (23) in a vehicle width direction.

12. The vehicle (1) as claimed in claim 10 or 11, wherein said fuel tank (53) is structured such as to cover at least a part of a side portion of said upper case portion (23) in addition to the upper side of said upper case portion (23).

13. The vehicle (1) as claimed in any preceding claim, further comprising an air filter (28) arranged in an inner portion of said air chamber (22) and adapted to purify air fed to the air intake port (15a) of said engine (12).

## Patentansprüche

1. Fahrzeug (1), das aufweist:
einen Rahmenabschnitt (3a, 3b);
einen Motor (12) mit einer Lufteintrittsöffnung (15a);
eine Luftkammer (22) in Verbindung mit der Lufteintrittsöffnung (15a), und die einen Gehäuseabschnitt auf der oberen und unteren Seite (23, 24) umfasst, wobei eine Passfläche (22a) zwischen dem oberen und unteren Gehäuseabschnitt (23, 24) in der Nähe eines oberen Endes des Rahmenabschnittes (3a, 3b) angeordnet ist; und
ein vorgegebenes Teil (25), das an einer Seitenfläche der Luftkammer (22) befestigt ist, wobei ein oberer Endabschnitt des vorgegebenen Teils (25) so konstruiert ist, dass es über einem oberen Endabschnitt eines Teils des Rahmenabschnittes (3a, 3b) positioniert wird, wie es von einer Seitenrichtung des Fahrzeuges (1) aus gesehen wird;
wobei
der untere Gehäuseabschnitt (24) einen ersten Eingriffsabschnitt (24b) umfasst, der mindestens teilweise in der Nähe eines oberen Endes des Rahmenabschnittes (3a, 3b) angeordnet ist,
wobei der obere Gehäuseabschnitt (23) einen zweiten Eingriffsabschnitt (23a) umfasst, der in einer derartigen Weise bereitgestellt wird, dass er dem ersten Eingriffsabschnitt (24b) des unteren Gehäuseabschnittes (24) entspricht und mit dem ersten Eingriffsabschnitt (24b) in Eingriff gebracht wird; und **dadurch gekennzeichnet, dass**
ein Teil des ersten Eingriffsabschnittes (24b) eines Seitenflächenabschnittes (24d) in einer hinteren Seite des unteren Gehäuseabschnittes (24) entsprechend einem Teil, an dem das vorgegebene Teil (25) befestigt wird, in einer derartigen Weise ausgebildet ist, dass es zu einer oberen Seite höher als die anderen Teile des ersten Eingriffsabschnittes (24b) des Seitenflächenabschnittes (24d) vorsteht, an dem das vorgegebene Teil (25) nicht befestigt ist.

2. Fahrzeug (1) nach Anspruch 1, bei dem das vorgegebene Teil (25) ein Betätigungselement umfasst.

3. Fahrzeug (1) nach Anspruch 2, bei dem der Motor (12) in einer unteren Seite des unteren Gehäuseabschnittes (24) vorhanden ist, und wobei das Fahrzeug (1) außerdem aufweist:
einen stationären Trichter (36), der in der Luftkammer (22) vorhanden und ausgebildet ist, um Luft in die Lufteintrittsöffnung (15a) des Motors (12) einzuführen; und
einen beweglichen Trichter (37), der beweglich in einer Lufteintrittsöffnungsseite des stationären Trichters (36) angeordnet und ausgebildet ist, um Luft zur Lufteintrittsöffnung (15a) des Motors (12) zusammen mit dem stationären Trichter (36) zu leiten, und
wobei das Betätigungselement (25) für das Bewegen des beweglichen Trichters vorhanden ist.

4. Fahrzeug (1) nach einem der vorhergehenden Ansprüche, bei dem die Passfläche (22a) zwischen dem unteren Gehäuseabschnitt (24) und dem oberen Gehäuseabschnitt (23) auf der Basis eines Eingriffs zwischen dem ersten Eingriffsabschnitt (24b) des unteren Gehäuseabschnittes (24) und dem zweiten Eingriffsabschnitt (23a) des oberen Gehäuseabschnittes (23) konstruiert ist, und
wobei ein Teil der Passfläche (22a) entsprechend dem Teil, an dem das vorgegebene Teil (25) befestigt wird, in einer derartigen Weise ausgebildet ist, dass es zu einer oberen Seite vorsteht als die anderen Teile der Passfläche (22a), an der das vorgegebene Teil (25) nicht befestigt ist.

5. Fahrzeug (1) nach einem der vorhergehenden Ansprüche, bei dem ein äußerer peripherer Rand in der Nähe eines oberen Endes des unteren Gehäuseabschnittes (24) so ausgebildet ist, dass er zu einer äußeren Seite vorsteht,
wobei ein erster Eingriffsabschnitt (24b) des unteren Gehäuseabschnittes (24) längs eines äußeren peripheren Randes in der Nähe eines oberen Endabschnittes vorhanden ist, der zur äußeren Seite des unteren Gehäuseabschnittes (24) vorsteht, und
wobei mindestens ein Teil des ersten Eingriffsabschnittes (24b) des unteren Gehäuseabschnittes (24) über dem Rahmenabschnitt (3a, 3b) angeordnet ist.

6. Fahrzeug (1) nach einem der vorhergehenden Ansprüche, bei dem der Rahmenabschnitt (3a, 3b) einen ersten Rahmenabschnitt (3a) und einen zweiten Rahmenabschnitt (3b) umfasst, die in einer derartigen Weise ausgebildet sind, dass sie in einer Breitenrichtung des Fahrzeuges verzweigt sind,
wobei der untere Gehäuseabschnitt (24) zwischen dem ersten und zweiten Rahmenabschnitt (3a, 3b) angeordnet ist, und
wobei der erste Eingriffsabschnitt (24b) des unteren Gehäuseabschnittes (24) in der Nähe der oberen Enden des ersten und zweiten Rahmenabschnittes (3a, 3b) angeordnet ist.

7. Fahrzeug (1) nach einem der vorhergehenden Ansprüche, bei dem der Rahmenabschnitt (3a, 3b) einen ersten Rahmenabschnitt (3a) und einen zweiten Rahmenabschnitt (3b) umfasst, die in einer derartigen Weise ausgebildet sind, dass sie in einer Breitenrichtung des Fahrzeuges verzweigt sind, und
wobei das vorgegebene Teil (25) in einem Seitenteil des unteren Gehäuseabschnittes (24) angeordnet ist, der zwischen dem ersten und zweiten Rahmenabschnitt (3a, 3b) positioniert ist.

8. Fahrzeug (1) nach einem der vorhergehenden Ansprüche, bei dem der erste Eingriffsabschnitt (24b) des unteren Gehäuseabschnittes (24) einen konvexen Abschnitt (24f) umfasst, der in einer derartigen Weise bereitgestellt wird, dass er zu einer oberen Seite hin vorsteht, und
wobei der zweite Eingriffsabschnitt (23a) des oberen Gehäuseabschnittes (23) einen konkaven Abschnitt (23b) umfasst, der in einer derartigen Weise bereitgestellt wird, dass er zu einer unteren Seite hin vorsteht und mit dem konvexen Abschnitt (24f) des unteren Gehäuseabschnittes (24) in Eingriff kommt.

9. Fahrzeug (1) nach Anspruch 8, das außerdem ein Dichtungselement (27) für das Abdichten zwischen dem konkaven Abschnitt (23b) des oberen Gehäuseabschnittes (23) und dem konvexen Abschnitt (24f) des unteren Gehäuseabschnittes (24) aufweist.

10. Fahrzeug (1) nach einem der vorhergehenden Ansprüche, das außerdem einen Kraftstofftank (53) aufweist, der in einer derartigen Weise angeordnet ist, dass er eine obere Seite des oberen Gehäuseabschnittes (23) bedeckt.

11. Fahrzeug (1) nach Anspruch 10, bei dem der Kraftstofftank (53) so konstruiert ist, dass er mindestens einen Teil der oberen Seite des Rahmenabschnittes (3a, 3b) zusätzlich zur oberen Seite des oberen Gehäuseabschnittes (23) in einer Breitenrichtung des Fahrzeuges bedeckt.

12. Fahrzeug (1) nach Anspruch 10 oder 11, bei dem der Kraftstofftank (53) so konstruiert ist, dass er mindestens einen Teil eines Seitenabschnittes des oberen Gehäuseabschnittes (23) zusätzlich zur oberen Seite des oberen Gehäuseabschnittes (23) bedeckt.

13. Fahrzeug (1) nach einem der vorhergehenden Ansprüche, das außerdem einen Luftfilter (28) aufweist, der in einem inneren Abschnitt der Luftkammer (22) angeordnet und ausgebildet ist, um die Luft zu reinigen, die der Lufteintrittsöffnung (15a) des Motors (12) zugeführt wird.

## Revendications

1. Véhicule (1), comprenant:
une partie de cadre (3a, 3b);
un moteur (12), comportant un orifice d'admission d'air (15a) ;
une chambre à air (22), en communication avec l'orifice d'admission d'air (15a) et englobant des parties de carter latérales supérieure et inférieure (23, 24), une face d'accouplement (22a) entre lesdites parties de carter supérieure et inférieure (23, 24) étant agencée près d'une extrémité supérieure de ladite partie de cadre (3a, 3b) ; et
une pièce prédéterminée (25), fixée sur une surface latérale de ladite chambre à air (22), dans lequel une partie d'extrémité supérieure de ladite pièce prédéterminée (25) est structurée de sorte à être positionnée au-dessus d'une partie d'extrémité supérieure d'une partie de ladite partie de cadre (3a, 3b), vue à partir d'une direction latérale du véhicule (1) ; dans lequel :
ladite partie de carter inférieure (24) englobe une première partie d'engagement (24b), agencée au moins en partie près d'une extrémité supérieure de ladite partie de cadre (3a, 3b) ;
dans lequel ladite partie de carter supérieure (23) englobe une deuxième partie d'engagement (23a), agencée de sorte à correspondre à la première partie d'engagement (24b) de ladite partie de carter inférieure (24), et est engagée dans ladite première partie d'engagement (24b) ; et **caractérisé en ce que**
une partie de la première partie d'engagement (24b) d'une partie de surface latérale (24d) dans un côté arrière de ladite partie de carter inférieure (24), correspondant à une partie sur laquelle ladite pièce prédéterminée (25) est fixée, est formée de sorte à déborder davantage vers un côté supérieur que les autres parties de ladite première partie d'engagement (24b) de la partie de surface latérale (24d), sur lesquelles ladite pièce prédéterminée (25) n'est pas fixée.

2. Véhicule (1) selon la revendication 1, dans lequel ladite pièce prédéterminée (25) englobe un actionneur.

3. Véhicule (1) selon la revendication 2, dans lequel ledit moteur (12) est agencé dans un côté inférieur de ladite partie de carter inférieure (24), ledit véhicule (1) comprenant en outre :
un entonnoir fixe (36), agencé dans la chambre à air (22) et adapté pour introduire l'air dans ledit orifice d'admission d'air (15a) dudit moteur (12) ; et
un entonnoir mobile (37), agencé de manière mobile dans un orifice d'admission d'air dudit entonnoir fixe (36), et adapté pour conduire l'air vers l'orifice d'admission d'air (15a) dudit moteur (12), ensemble avec ledit entonnoir fixe (34) ; et
dans lequel ledit actionneur (25) est destiné à déplacer ledit entonnoir mobile.

4. Véhicule (1) selon l'une quelconque des revendications précédentes, dans lequel la face d'accouplement (22a) entre ladite partie de carter inférieure (24) et ladite partie de carter supérieure (23) est structurée sur la base d'un engagement entre la première partie d'engagement (24) de ladite partie de carter inférieure (24) et la deuxième partie d'engagement (23a) de ladite partie de carter supérieure (23) ; et
dans lequel une partie de ladite face d'accouplement (22a), correspondant à la partie sur laquelle ladite pièce prédéterminée (25) est fixée, est formée de sorte à déborder davantage vers un côté supérieur que les autres parties de ladite face d'accouplement (22a), sur lesquelles ladite pièce prédéterminée (25) n'est pas fixée.

5. Véhicule (1) selon l'une quelconque des revendications précédentes, dans lequel un bord périphérique externe proche d'une extrémité supérieure de ladite partie de carter inférieure (24) est formé de sorte à déborder vers un côté externe ;
dans lequel une première partie d'engagement (24b) de ladite partie de carter inférieure (24) est agencée le long d'un bord périphérique externe proche d'une partie d'extrémité supérieure débordant vers le côté externe de ladite partie de carter inférieure (24) ; et
dans lequel au moins une partie de la première partie d'engagement (24b) de ladite partie de carter inférieure (24) est agencée au-dessus de ladite partie de cadre (3a, 3b).

6. Véhicule (1) selon l'une quelconque des revendications précédentes, dans lequel ladite partie de cadre (3a, 3b) englobe une première partie de cadre (3a) et une deuxième partie de cadre (3b), formées de sorte à être ramifiées dans une direction de la largeur du véhicule ;
dans lequel ladite partie inférieure de carter (24) est agencée entre lesdites première et deuxième parties de cadre (3a, 3b) ; et
dans lequel la première partie d'engagement (24b) de ladite partie de carter inférieure (24) est agencée près des extrémités supérieures desdites première et deuxième parties de cadre (3a, 3b).

7. Véhicule (1) selon l'une quelconque des revendications précédentes, dans lequel ladite partie de cadre (3a, 3b) englobe une première partie de cadre (3a) et une deuxième partie de cadre (3b), formées de sorte à être ramifiées dans une direction de la largeur du véhicule ; et
dans lequel ladite pièce prédéterminée (25) est agencée dans une partie latérale de ladite partie de carter inférieure (24), positionnée entre lesdites première et deuxième parties de cadre (3a, 3b).

8. Véhicule (1) selon l'une quelconque des revendications précédentes, dans lequel la première partie d'engagement (24b) de ladite partie de carter inférieure (24) englobe une partie convexe (24f), agencée de sorte à déborder vers un côté supérieur ; et
dans lequel la deuxième partie d'engagement (23a) de ladite partie de carter supérieure (23) englobe une partie concave (23b), agencée de sorte à déborder vers un côté inférieur et à s'engager dans la partie convexe (24f) de ladite partie de carter inférieure (24).

9. Véhicule (1) selon la revendication 8, comprenant en outre un élément d'étanchéité (27) pour établir l'étanchéité entre la partie concave (23b) de ladite partie de carter supérieure (23) et la partie convexe (24f) de ladite partie de carter inférieure (24).

10. Véhicule (1) selon l'une quelconque des revendications précédentes, comprenant en outre un réservoir de carburant (53), agencé de sorte à recouvrir un côté supérieur de ladite partie de carter supérieure (23).

11. Véhicule (1) selon la revendication 10, dans lequel ledit réservoir de carburant (53) est structuré de sorte à recouvrir au moins une partie du côté supérieur de ladite partie de cadre (3a, 3b), en plus du côté supérieur de ladite partie de carter supérieure (23) dans une direction de la largeur du véhicule.

12. Véhicule (1) selon les revendications 10 ou 11, dans lequel ledit réservoir de carburant (53) est structuré de sorte à recouvrir au moins une partie d'une partie latérale de ladite partie de carter supérieure (23), en plus du côté supérieur de ladite partie de carter supérieure (23).

13. Véhicule (1) selon l'une quelconque des revendications précédentes, comprenant en outre un filtre à air (28), agencé dans une partie interne de ladite chambre à air (22) et adapté pour purifier l'air amené dans l'orifice d'admission d'air (15a) dudit moteur (12).
